# EUROPEAN PATENT SPECIFICATION

(11) **EP 3 223 338 B1**
(45) Date of publication and mention of the grant of the patent: **11.05.2022**
(21) Application number: 16186435.0
(22) Date of filing: 30.08.2016
(51) Int. Cl.: H01M 10/613, H01M 10/6567, H01M 10/6568, H01M 50/204, H01M 50/258, H01M 50/298, H01M 50/507, H01M 50/548, H01M 10/643, H01M 50/213

(54) **BATTERY MODULE**
BATTERIEMODUL
MODULE DE BATTERIE

(30) Priority: 25.03.2016 US 201615080882
(43) Date of publication of application: 27.09.2017
(73) Proprietor: Xing Power Inc., Victoria, Mahé (SC)
(72) Inventor: TUCKER, Kareem Azizi, 24341 New Taipei City (TW)
(74) Representative: Zimmermann, Tankred Klaus

(56) References cited:
- DE-A1-102013 200 930
- JP-A- 2009 117 264
- JP-A- 2012 174 363
- US-A1- 2013 224 532
- US-A1- 2015 333 382
- US-A1- 2016 006 006
- US-A1- 2016 064 704
- US-A1- 2016 172 635

## Description

The disclosure relates to a battery module, and more particularly to a submerged type battery module that can be interlocked with other ones of the battery modules.

Battery cells such as lithium-ion battery cells generate heat during operation and during recharging. When overheated or otherwise exposed to high-temperature environments, operation of the lithium-ion battery cells may be adversely affected. In extreme cases, overheated lithium-ion battery cells are known to suffer catastrophic failure such as catching fire. Cooling devices are typically employed with lithium-ion battery packs, which are constructed of the lithium-ion battery cells, to mitigate against the undesirable overheating conditions. Conventional cooling techniques and devices are, for example, air-to-air cooling, cooling plates or fins sandwiched between adjacent ones of the battery cells within the battery pack, heat sinks, and sealed chambers with channels through which a cooling fluid transfer heat from the battery cells to a cooling element by convection.

The lithium-ion battery packs and the conventional cooling devices occupy a fixed amount of space. Therefore, when applying the lithium-ion battery packs and one of the conventional cooling devices in an electric vehicle or an electric watercraft, the lithium-ion battery packs and the one of the conventional cooling devices may not be able to be properly installed in the electric vehicle or the electric watercraft due to a limited amount of space available in the electric vehicle or the electric watercraft. Therefore, applications of the lithium-ion battery packs are greatly limited.

US 2016/064704 A1 describes a sealing element for sealing battery cells of a battery module for the purely electric drive of a motor vehicle. The sealing element has a first sealing disk for a seal-forming attachment between a housing and a first attachment frame, and a second sealing disk spaced from the first sealing disk for a seal-forming attachment between the housing and a second attachment frame. The battery cells are sealed with respect to a cooling medium that flows through the housing.

JP 2012-174363 A describes a frame for holding a battery. The frame includes a frame part having a plurality of housing parts for holding the battery therein, an electrode terminal member which is provided in the housing part and has a contact part that comes in contact with one pole of the battery, and a conductive member which is provided at the frame part and extends along the housing part. In addition, an engaging part for detachably connecting with another member is formed in the frame part.

US 2013/224532 A1 describes a battery assembly comprising a plurality of battery blocks, where each battery block comprises a first metal plate fixedly connected to the positive terminals of a plurality of rechargeable battery cell members and a second metal plate fixedly connected to the negative terminals of the cell members, further comprising a printed circuit board provided with an electronic circuit configured to monitor, control and/or balance the battery blocks, where the metal plates of subsequent battery blocks are fixedly connected to each other such that the battery blocks are electrically configured in series, and where the PCB is mechanically fixed to mounting flanges of the metal plates with mounting means that also provides an electric connection between the metal plates and the PCB.

DE 10 2013 200 930 A1 describes a device having connecting elements for coupling battery modules. The connection elements are arranged such that the connection elements positively engage for coupling the battery modules under normal arrangement of the battery modules. The interconnected connection elements form a groove spring connection, a hook slot connection or dove tail joint.

US 2016/006006 A1 discloses a modular battery with means for mechanically joining several battery modules in two directions, namely the vertical and a horizontal direction.

JP 2009 117264 A discloses air cooling of a battery module, where cells in a casing are submerged into a space filled with air cooling fluid.

It is an object of the present invention is to provide a battery module that can alleviate at least the drawback of the prior art.

This object is achieved by a battery module according to claim 1.

The features and advantages of the disclosure will become apparent in the following detailed description of the embodiments with reference to the accompanying drawings, of which:
Figure 1 is a perspective view of an embodiment of a battery module according to the disclosure;
Figure 2 is a top view of the embodiment;
Figure 3 is a side view of the embodiment;
Figure 4 is a perspective view of the embodiment viewed from another angle;
Figure 5 is a perspective view illustrating two of the battery modules being stacked one above the other;
Figure 6 is a perspective view illustrating an exemplary embodiment of the battery module including six battery cells;
Figure 7 is a perspective view illustrating another exemplary embodiment of the battery module including twelve battery cells;
Figure 8 is a perspective view of a modification of the battery module of Figure 6, illustrating a lower case body of an outer casing of the battery module;
Figure 9 is a schematic bottom view of the modification of the battery module of Figure 6, illustrating an upper case body of the outer casing;
Figure 10 is a perspective view illustrating another embodiment of the battery module according to the disclosure;
Figure 11 is a schematic perspective view illustrating a battery pack including a plurality of the battery modules of Figure 1 mounted to an electric vehicle;
Figure 12 is a schematic rear view illustrating the electric vehicle and the battery pack in Figure 11;
Figure 13 is a schematic side view illustrating another battery pack including a plurality of the battery modules of Figure 10;
Figure 14 is another schematic side view illustrating the battery pack in Figure 13;
Figure 15 is a schematic block diagram illustrating a battery system including a plurality of the battery modules of the embodiment; and
Figure 16 is a schematic block diagram illustrating another battery system including the battery modules of the embodiment.

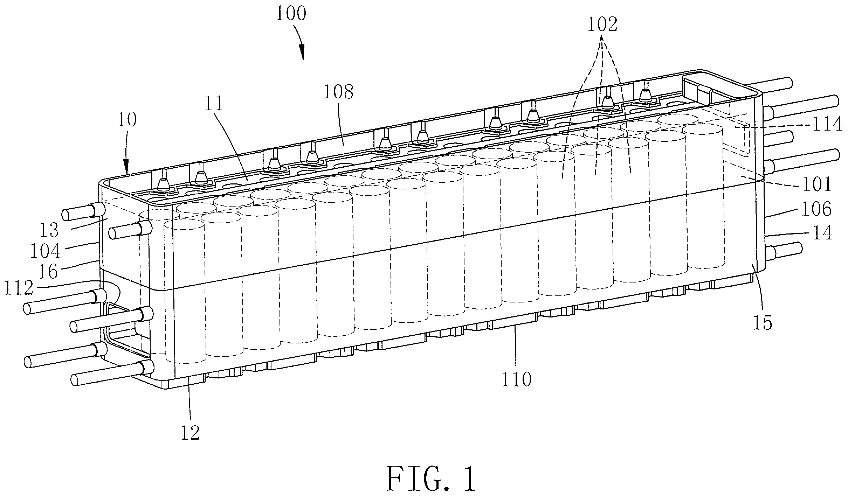

Referring to Figures 1 to 4, an embodiment of a battery module 100 according to the disclosure is adapted for use with a cooling fluid to cool the battery module 100. The cooling fluid may be a dielectric fluid capable of absorbing heat. The cooling fluid may also provide a fire suppression capability. The battery module 100 includes a plurality of battery cells 102, an outer casing 10, a first electrode 116, and a second electrode 122.

Each of the battery cells 102 has opposite first and second terminals 102a, 102b. One of the first and second terminals 102a, 102b is positive and the other one of the first and second terminals 102a, 102b is negative. In certain embodiments, each of the battery cells 102 may be a rechargeable battery, for example but not limited to, a Nickel-Cadmium (NiCd) battery, a Nickel-metal-hydride (NiMH) battery, or a Lithium-ion battery. In certain embodiments, the battery cells 102 may be cylindrical Lithium ion 18650 cells.

The outer casing 10 defines an internal space 101 that accommodates the battery cells 102 therein and that is for the cooling fluid to flow therethrough. The outer casing 10 has opposite first and second walls 11, 12, opposite third and fourth walls 13, 14 interconnecting the first and second walls 11, 12, and opposite fifth and sixth walls 15, 16 interconnecting the third and fourth walls 13, 14 and interconnecting the first and second walls 11, 12, a first engaging portion 108 disposed on the first wall 11, and a second engaging portion 110 disposed on the second wall 12.

In greater detail, the outer casing 10 includes a lower casing body 106 that has the second wall 12, and an upper casing body 104 that has the first wall 11 and that cooperates with the lower casing body 106 to define the internal space 101. Each of the third, fourth, fifth, and sixth walls 13, 14, 15, 16 extends from the lower basing body 106 to the upper casing body 104. In this embodiment, the first and second engaging portions 108, 110 of the outer casing 10 are configured as female and male flanges, respectively.

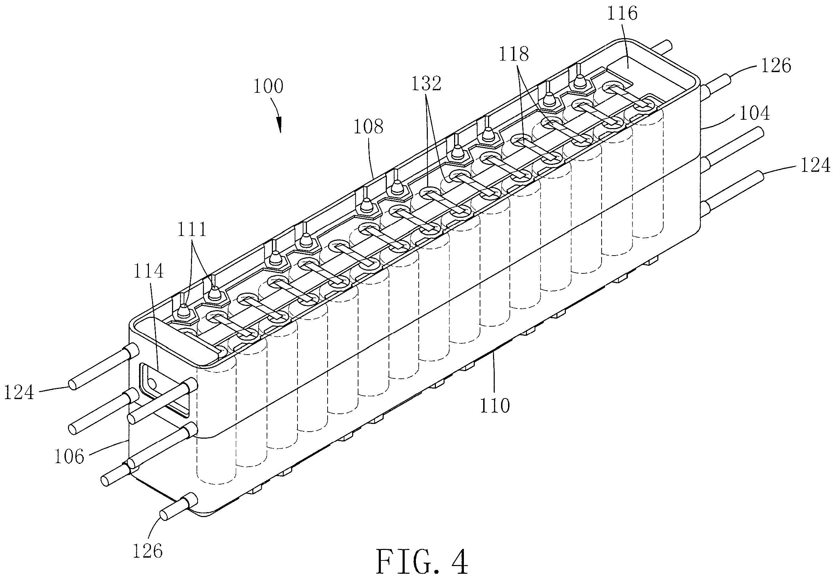

The outer casing 10 further has a first opening 112 and a second opening 114 respectively formed in the third and fourth walls 13, 14, and spatially communicating with the internal space 101 for the cooling fluid to flow in and out of the internal space 101. In this embodiment, the lower casing body 106 has the first opening 112, and the upper casing has the second opening 114. The lower and upper casing bodies 106, 104 are securely coupled using a plurality of bolts 111 (see Figure 4). In certain embodiments, both of the first and second openings 112, 114 may be formed on the lower casing body 106, or on the upper casing body 104. In certain embodiments, the outer casing 10 may have more than two of the openings 112, 114 to meet design criteria of a particular application.

In certain embodiments, the lower and upper casing bodies 106, 104 may be coupled using one or more of the following techniques, bolting (e.g., using the bolts 111), welding, bonding using an adhesive material, etc. The outer casing 10 may be constructed using a plastic or polymer material, e.g., polystyrene (PS), polyvinyl chloride (PVC), polycarbonate (PC), polyethylene (PE), acrylic, PLEXIGLASS, LEXAN, phenolic resin, etc. In some embodiments, materials such as liquid crystal polymer, acrylonitrile butadiene styrene polycarbonate alloy (ABS-PC alloy), or other engineering plastics may be used depending on actual design needs.

The first electrode 116 is disposed on the first wall 11 and is electrically connected to the first terminal 102a of each of the battery cells 102. The second electrode 122 is disposed on the second wall 12 and is electrically connected to the second terminal 102b of each of the battery cells 102. In this embodiment, the first electrode 116 has two end portions 116a each having a width substantially equal to that of the outer casing 10, and a connecting portion 116b interconnecting the end portions 116a and being electrically connected to the first terminal 102a of each of the battery cells 102. The second electrode 122 has two end portions 122a and a connecting portion 122b similar in structure to the end portions 116a and the connecting portion 116b of the first electrode 116, respectively. The connecting portion 122b of the second electrode 122 is electrically connected to the second terminal 102b of each of the battery cells 102. The first and second walls 11, 12 of the outer casing 10 are formed with a plurality of spaced-apart connecting holes 132 (Figure 4 only illustrates the connecting holes 132 formed in the first wall 11). Each of the connecting holes 132 corresponds in position to a corresponding one of the battery cells 102, and spatially communicates with the internal space 101. The battery module 100 further includes a plurality of spaced-apart straps 118 disposed on the first and second walls 11, 12 of the outer casing 10 and being electrically conductive (Figure 4 only illustrates the straps 118 on the first wall 11). Each of the straps 118 interconnects two adjacent ones of the battery cells 102 which are exposed respectively from corresponding ones of the connecting holes 132. The connecting portion 116b, 122b of each of the first and second electrodes 116, 122 is connected to corresponding ones of the straps 118 so as to establish electrical connection to each of the battery cells 102.

Each of the first and second electrodes 116, 122 is made of a conductive material, for example, metal such as copper, aluminum, nickel, etc., or an alloy thereof. The straps 118 are made of a conductive material that is the same as or different from the material used to make the first and second electrodes 116, 122. Each of the straps 118 may be attached to the corresponding one of the first and second electrodes 116, 122 by soldering, laser welding, friction welding, ultrasonic welding, tungsten inert gas (TIG) welding, metal inert gas (MIG) welding, or other technique for forming a physical and electrical connection. Alternatively, each of the first and second electrodes 116, 122 and corresponding ones of the straps 118 may be formed integrally as one piece in a single machining step.

In certain embodiments, the battery module 100 may be provided with a connector 120 that is implemented as a threaded stud or a waterproof insulated electrical connector 120. The connector 120 may be used to monitor an operating condition of the battery module 100. In an example, the connector 120 may be connected to an external battery management system (BMS) to measure voltage or temperature of each of the battery modules 100 which are stacked to form a battery pack.

In this embodiment, the battery module 100 is adapted to be used together with a manifold (not shown) which is for flowing of the cooling fluid therethrough and which is connected to a cooling system (not shown) . The battery module 100 further includes a plurality of manifold-connecting members 124 protruding outwardly from the third and fourth walls 13, 14 of the outer casing 10, surrounding the first and second openings 112, 114, and being adapted to interconnect the outer casing 10 and the manifold. Each of the manifold-connecting members 124 may be configured as a threaded rod.

In certain embodiments, the battery module 100 may be provided with two gaskets (not shown) respectively disposed in the first and second openings 112, 114 to form a seal with the manifold.

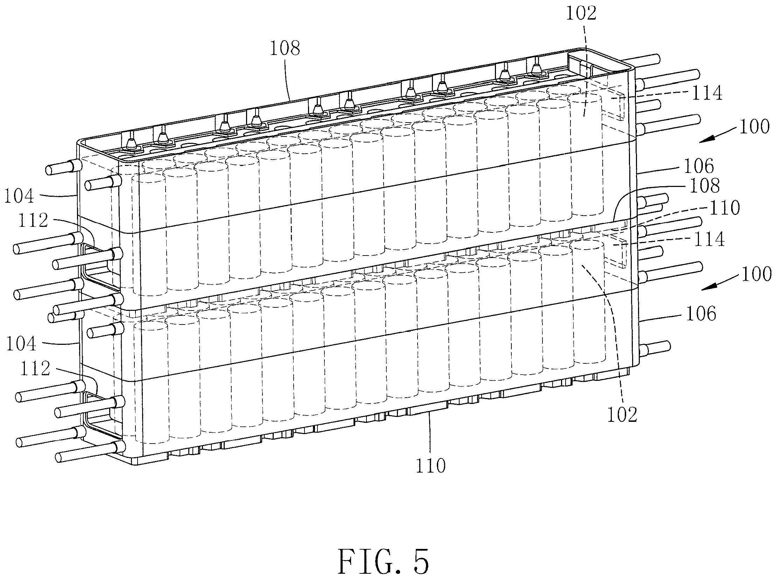

As shown in Figure 5, two of the battery modules 100 are coupled together with the first engaging portion 108 of one of the battery modules 100 fittingly engaging the second engaging portion 110 of the other one of the battery modules 100, and with the first electrode 116 of the one of the battery modules 100 contacting the second electrode 122 of the other one of the battery modules 100 for establishing an electrical connection. The first and second engaging portions 108, 110 of the battery modules 100 are configured to interlock when the battery modules 100 are stacked together, thereby forming a solid mechanical interconnection. In this way, the battery modules 100 may be stacked like interlocking building blocks (e.g., LEGO building blocks) to form column(s) of a battery pack.

In this embodiment, the battery pack is constituted by the battery modules 100 having the same size. In certain embodiments, the battery modules 100 in the battery pack may have different sizes. In actual application, a peak power demand for boats, planes and cars is typically about 500-1000% of a cruising (or continuous) power demand. In an example, a few large-sized battery modules 100 may be used for more even power needs (e.g., a backup power bank), or a larger number of small-sized battery modules 100 may be used in applications where frequent power peaks need to be supplied (e.g., an electric garbage truck).

In certain embodiments, the battery module 100 may further include a plurality of protrusions 126 (see Figure 4) protruding outwardly from the third and fourth walls 13, 14 of the outer casing 10, being spaced apart from the manifold-connecting members 124, andbeingused to connect the battery module 100 to a bracket (not shown) to secure the column(s) of the battery modules 100 together to form the battery pack. Each of the protrusions 126 may be configured as a threaded rod which is shorter than the manifold-connecting members 124.

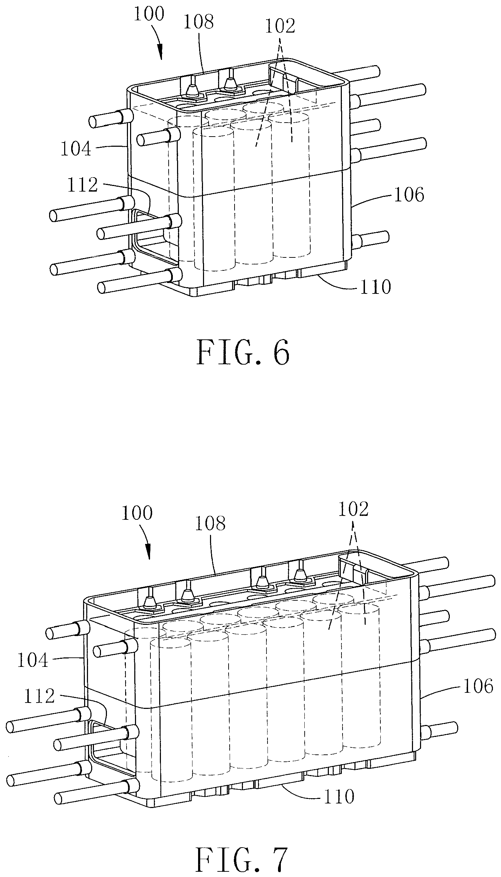

The lower and upper casing bodies 106, 104 of the outer casing 10 are configured to accommodate the battery cells 102 arranged in N rows of M battery cells 102, where N and M are integers. In an example, the battery module 100 may be implemented in a variety of sizes having two rows (N=2), with each row having the number (M) of the battery cells 102 being a multiple of 3 (e.g., 6, 12, 18, 30 cells, etc.). In general, the battery module 100 may be implemented with any combination of rows and cells. In an example, a 15-cell battery module 100 may be implemented with either three rows of five battery cells 102 or five rows of three battery cells 102. However, other arrangements may be implemented to meet the design criteria of a particular application. In some embodiments, computer techniques may be utilized to obtain an optimized arrangement of the battery cells 102. Figure 6 illustrates an exemplary embodiment of the battery module 100 including six of the battery cells 102 that are implemented with two rows of three battery cells 102. Figure 7 illustrates another exemplary embodiment of the battery module 100 including twelve of the battery cells 102 that are implemented with two rows of six battery cells 102.

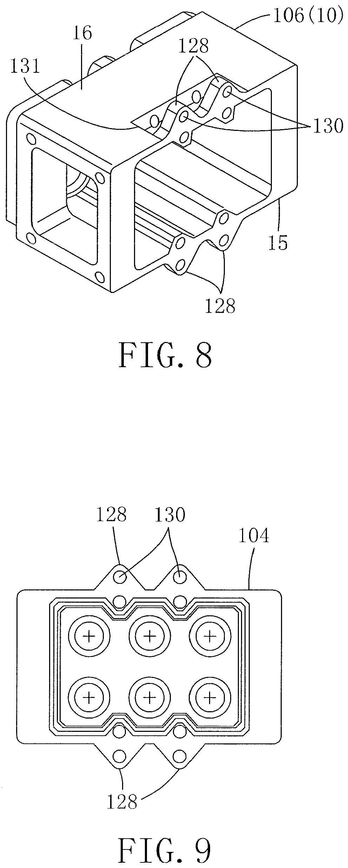

Referring to Figures 8 and 9, in a modification of the battery module 100 of Figure 6, the outer casing 10 includes a plurality of engaging slots 131 (only one is shown in Figure 8) that are formed in the fifth and sixth walls 15, 16, and a plurality of protruding tabs 128 that are disposed on the fifth and sixth walls 15, 16 at positions corresponding to the engaging slots 131. The battery module 100 is adapted to be laterally connected to another battery module 100 which is adjacent to one of the fifth and sixth walls 15, 16 with one of the protruding tabs 128 of the battery module 100 engaging a corresponding one of the engaging slots 131 of the another battery module 100. Each of the protruding tabs 128 is formed with a through hole 130 through which a corresponding one of the bolts 111 (see Figure 4) extends to assemble the battery modules 100 into a battery pack.

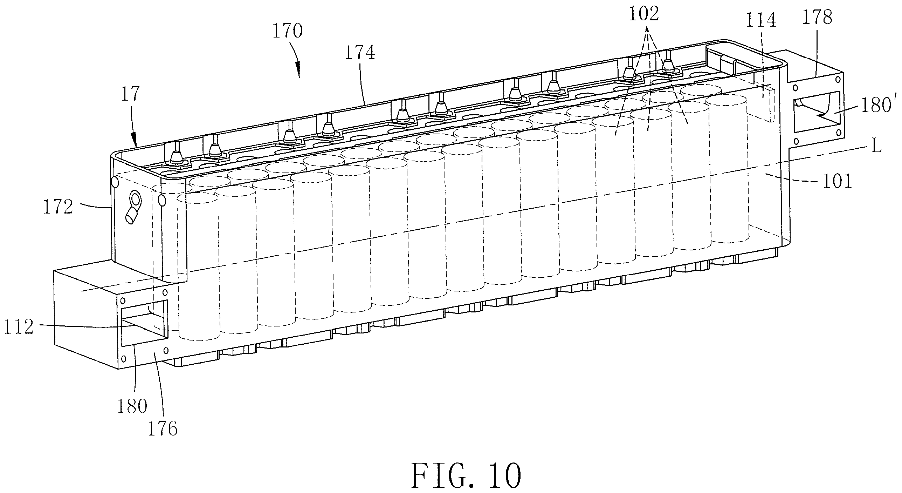

Referring to Figure 10, another embodiment of a battery module 170 according to the disclosure includes a plurality of battery cells 102, and an outer casing 17 including a lower casing body 172 surrounding the battery cells 102 and an upper casing body 174 configured as a lid for enclosing the battery cells 102 to define an internal space 101. The outer casing 17 has first, second, third, fourth, fifth, sixth walls respectively similar to the first, second, third, fourth, fifth, sixth walls 11, 12, 13, 14, 15, 16 of the battery module 100 in Figure 1. The outer casing 17 is made of a plastic or polymer material described in the above-mentioned embodiment. The upper casing body 174 may be glued, fused, welded, and/or bonded to the lower casing body 172. The lower casing body 172 has opposite first and second openings 112, 114 that spatially communicate with the internal space 101, a first integral manifold portion 176 that extends outwardly from the third wall of the outer casing 17 and that corresponds in position to the first opening 112, and a second integral manifold portion 178 that extends outwardly from the fourth wall of the outer casing 17 and that corresponds in position to the second opening 114. The first integral manifold portion 176 is formed with a groove 180 communicating spatially with the first opening 112 and the internal space 101, and is adapted for the cooling fluid to flow therethrough. The second integral manifold portion 178 is formed with a groove 180' communicating spatially with the second opening 114 and the internal space 101, and is adapted for the cooling fluid to flow therethrough. The first and second integral manifold portions 176, 178 of the battery module 170 are configured to form manifolds with adjacent ones of the battery modules 170 when assembled into a battery pack. In certain embodiments, the first and second integral manifold portions 176, 178 are configured to permit a gasket to be disposed between two adjacent ones of the integral manifold portions 176, 178 so as to form a seal when the battery modules 170 are connected. The battery module 170 may be configured to interlock with a structure similar to the first and second engaging portions 108, 110 of the battery module 100 (see Figure 1).

In this embodiment, the first and second integral manifold portions 176, 178 of the battery module 170 are skewed (e.g., on opposite sides of a center line (L) of the battery module 170 which extends longitudinally of the battery module 170) . In this way, alignment of the first and second integral manifold portions 176, 178 is ensured when two adjacent ones of the battery modules 170 are oriented for serial connection, and a better cooling fluid flow over the battery cells 102 may be achieved for an effective heat transfer. In certain embodiments, the number of the integral manifold portions 176, 178 may be greater than two.

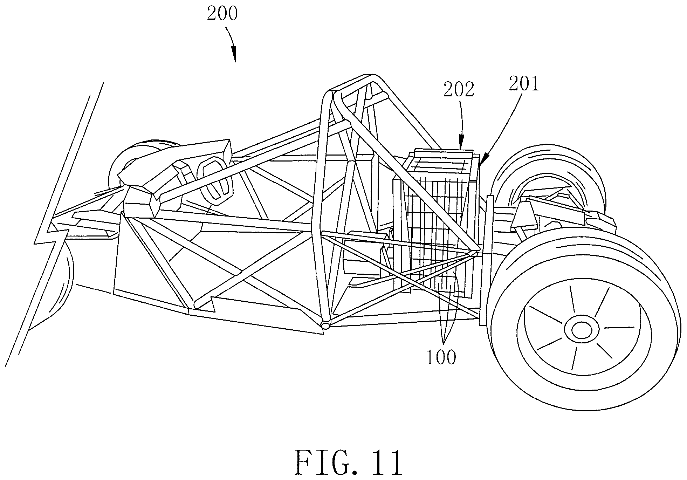

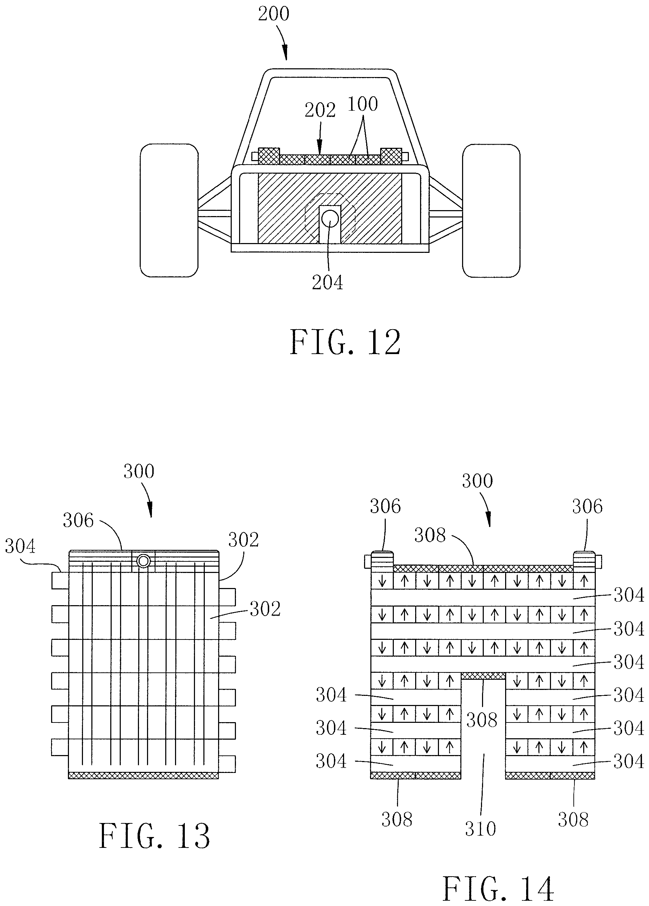

Figures 11 and 12 illustrate an electric vehicle 200 including a battery pack 202 that is constructed of a plurality of the battery modules 100 in Figure 1 assembled in columns and coupled together by a number of manifolds (not shown) and mounting brackets 201. The battery pack 202 is configured to accommodate component (s) of the electric vehicle 200 such as a motor shaft 204, as shown in Figure 12. In certain embodiments, the battery pack 202 may be divided into two or more battery blocks (not shown) depending on the space available in the electric vehicle 200. The battery blocks may be wired together to form a complete battery pack.

In an example, the electric vehicle 200 has a drive train including a 450-volt high power density motor and a controller (not shown). The battery pack 202 is configured to provide 33 kilowatt-hours (kWh) at 450 volts. The battery pack 202 is constructed of 108 of the battery modules 100 with each of the battery modules 100 including thirty battery cells 102 for a total of 3, 240 battery cells 102. The electric vehicle 200 may be provided with a cooling device (not shown), e.g., a radiator and cooling system, and a recharging device (not shown), e.g., a SAE J1772 charging system, for the battery pack 202.

Figures 13 and 14 illustrate another battery pack 300 including a plurality of battery modules 302., a plurality of horizontal manifolds 304, a plurality of battery connection caps 306, and a plurality of cross-over hats 308. In one example, the battery modules 302 may be structurally similar to the battery modules 100 of Figure 1, and the horizontal manifolds 304 are bolted to the battery modules 302 using a plurality of threaded rods similar to the manifold-connecting members 124 shown in Figure 4. In another example, the battery modules 302 may be structurally similar to the battery modules 170, the horizontal manifolds 304 are formed by a plurality of integral manifold portions similar to the first and second integral manifold portions 176, 178 of the outer casing 17 shown in Figure 10.

The horizontal manifolds 304 permit the cooling fluid to be pumped through all of the battery modules 302 by a cooling device (not shown) implemented to the battery pack 300. In certain embodiments, the battery pack 300 may include a plurality of vertical manifolds (not shown for clarity) connected to the horizontal manifolds 304 and columns of the battery modules 302.

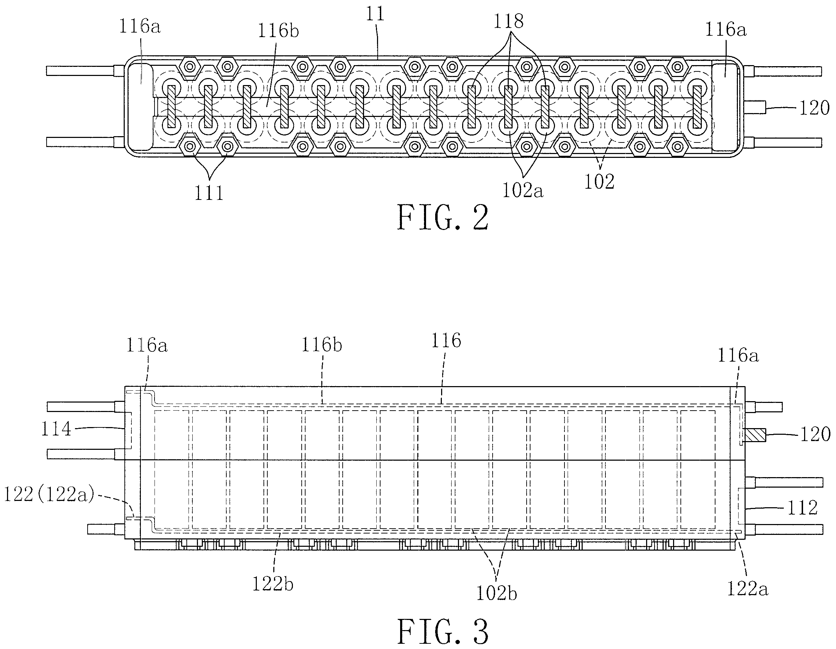

The cross-over hats 308 are used to connect columns of the battery modules 302 together so as to form the battery pack 300. For connecting the columns of the battery modules 302 in series, first, adjacent ones of the columns of the battery modules 302 are disposed to have opposite orientation as shown in Figure 14, with the arrows pointing to top surfaces of the battery modules 302. The arrows in Figure 14 may also indicate directions of current flow of the battery pack 300. Each of the cross-over hats 308 is configured to correspond in shape to one of top and bottom surfaces of the battery pack 300. The cross-over hats 308 include one or more electrodes similar to the first and second electrodes 116, 122 shown in Figure 3 for electrically connecting uppermost ones of the battery modules 302 together, and for electrically connecting lowermost ones of the battery modules 302 together. The battery modules 302 and the cross-over hats 308 may be arranged to form a space 310 that permits the battery pack 300 to fit around component (s) of an electric vehicle (not shown) in which the battery pack 300 is mounted.

The connection caps 306 include one or more electrodes similar to the first and second electrodes 116, 122 shown in Figure 3 for electrically connecting the battery modules 302 to a prime mover, or an electrical system, etc. of the electric vehicle. When the battery modules 302, the cross-over hats 308, and the connection caps 306 are assembled, all high voltage components of the battery pack 300 are fully enclosed.

For connecting the battery modules 302 in parallel in certain embodiments, the cross-over hats 308 may be configured such that the cross-over hats 308 are capable of electrically connecting the columns of the battery modules 302 which are disposed to have the same orientation.

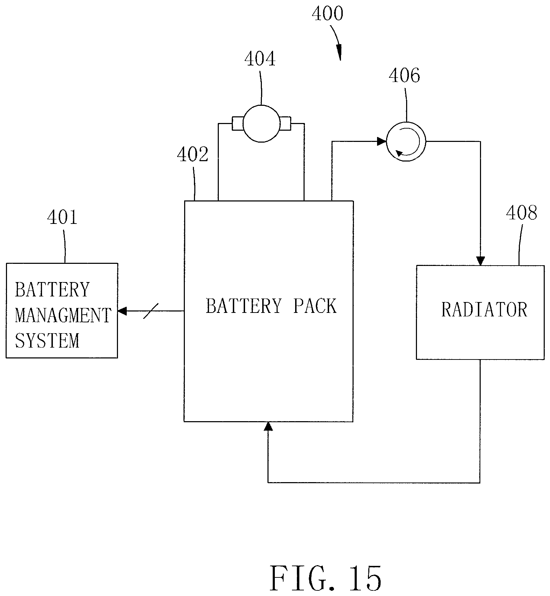

Referring to Figure 15, an electric vehicle battery system 400 includes a battery pack 402, a motor assembly 404, a pump assembly 406, and a radiator 408. The battery pack 402 may be configured based on energy demands of the motor assembly 404. The battery pack 402 may also take into account other energy demands of an electric vehicle (not shown) . The battery pack 402 is constituted by battery modules structurally similar to the battery modules 100 in Figure 1 or the battery modules 170 in Figure 10. Although shown as a single unit, the battery pack 402 may be divided into two or more battery blocks (not shown), each including at least one battery module, which are electrically coupled together by using wires and plumbed together by using pipes and/or hoses, etc. In certain embodiments, the motor assembly 404 may include an alternating current (AC) electric motor. Direct current from the battery pack 402 may be converted to AC using either a conventional (e.g., inverter, etc.) or yet to be developed techniques.

In certain embodiments, the pump assembly 406 and the radiator 408 are configured to move the cooling fluid through the battery pack 402 to prevent overheating and thermal runaway. In an example, the battery pack 402, the pump assembly 406, and the radiator 408 are configured as a closed loop system. In other examples, a two phase cooling process may be implemented with the cooling fluid in liquid form. In addition to the cooling fluid flowing into one end of a battery module and out the other end of the battery module, a system pressure may be changed to adjust the boiling point of the cooling fluid for achieving effective cooling.

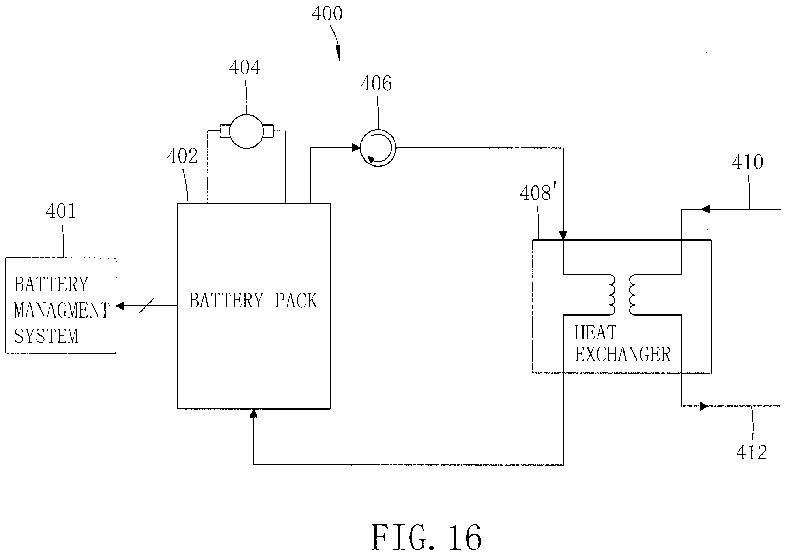

Referring to Figure 16, when the battery pack 402 is configured to power an electric watercraft (e.g., a water ski boat, jet ski, etc.), the radiator 408 may be replaced by a heat exchanger 408'. In an example, the heat exchanger 408' may be implemented as part of an open loop cooling system that uses lake water as a heat sink, with the lake water flows in and out of the battery system 400 through an inlet 410 and an outlet 412 of the heat exchanger 408', respectively.

In certain embodiments, the battery pack 402 may be connected to a battery management system 410 configured to monitor voltage and temperature of each of the battery modules in the battery pack 402, so as to ensure that the voltage and the temperature stay within predetermined (e.g., safe) limits. Each of the battery modules of the battery pack 402 may include a connector or a terminal similar in structure to that of the connector 120 in Figure 3 for facilitating connection to the battery management system 410 (e. g., using wires) .

In summary, the battery module of the disclosure has the following advantages:
1. The first and second engaging portions 108, 110 of the outer casing 10, 17 allows for a plurality of the battery modules 100, 170 to be built in different sizes and shapes to form a battery pack. Therefore, the battery pack can be customized to have a desired structural configuration in order to fit in a limited space, such as in an electric vehicle.
2. By virtue of the configuration of the outer casing 10, 17, high voltage components of the battery module 100, 170 are fully enclosed. The battery cells 102 are completely submerged in the cooling fluid for heat removal, thereby eliminating the need to install a separate cooling device as in the above-mentioned conventional battery packs.
3. The interconnected battery modules 100, 170 can be reconfigured to change the shape and/or application of the battery pack. In an example, a battery pack configured to use in an electric airplane may be disassembled and reassembled for use in an electric watercraft, or as a stationary storage battery, etc.
4. The battery modules 100, 170 in the battery pack can be replaced easily for service.

In the description above, for the purposes of explanation, numerous specific details have been set forth in order to provide a thorough understanding of the embodiment. It will be apparent, however, to one skilled in the art, that one or more other embodiments may be practiced without some of these specific details . It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects.

## Claims

1. A battery module (100, 170) adapted for use with a cooling fluid to cool said battery module, said battery module (100, 170) including
a plurality of battery cells (102), each having opposite first and second terminals (102a, 102b), and
an outer casing (10, 17) defining an internal space (101) that accommodates said battery cells (102) therein and that is for the cooling fluid to flow therethrough
wherein said outer casing (10, 17) has a first opening (112) and a second opening (114) for the cooling fluid to flow in and out of said internal space (101), a first wall (11), a second wall (12), said first and second walls (11, 12) being opposite to each other, said outer casing (10, 17) further having opposite third and fourth walls (13, 14) that interconnect said first and second walls (11, 12), said first and second openings (112, 114) being respectively formed in said third and fourth walls (13, 14);
wherein said outer casing (10, 17) has a first engaging portion (108) disposed on said first wall (11), and a second engaging portion (110) disposed on said second wall (12);
said battery module (100, 170) further includes
a first electrode (116) disposed on said first wall (11) and electrically connected to said first terminal (102a) of each of said battery cells (102), and
a second electrode (122) disposed on said second wall (12) and electrically connected to said second terminal (102b) of each of said battery cells (102);
said battery module (100, 170) is adapted to be coupled to another battery module (100, 170) which is adjacent to said first wall (11) with said first engaging portion (108) of said battery module (100, 170) fittingly engaging said second engaging portion (110) of said another battery module (100, 170), and with said first electrode (116) of said battery module (100, 170) contacting said second electrode (122) of said another battery module (100, 170) for establishing an electrical connection; and
said battery module (100, 170) further includes a plurality of spaced-apart straps (118) being electrically conductive and each interconnecting two adjacent ones of said battery cells (102), each of said first and second electrodes (116, 122) being connected to corresponding ones of said straps (118) so as to establish electrical connection to each of said battery cells (102).

2. The battery module (100, 170) as claimed in claim 1, further **characterized in that** said outer casing (10, 17) includes a lower casing body (106, 172) that has said second wall (12), and an upper casing body (104, 174) that has said first wall (11) and that cooperates with said lower casing body (106, 172) to define said internal space (101).

3. The battery module (100, 170) as claimed in claim 2, further **characterized in that** said lower casing body (106, 172) has at least one of said first and second openings (112, 114).

4. The battery module (100) as claimed in any one of claims 1 to 3, further **characterized in that** said battery module (100) further includes a plurality of manifold-connecting members (124) protruding outwardly from said third and fourth walls (13, 14) of said outer casing (10), surrounding said first and second openings (112, 114), and being adapted to interconnect said outer casing (10) and a manifold which is for flowing of the cooling fluid therethrough.

5. The battery module (170) as claimed in any one of claims 1 to 3, further **characterized in that** said outer casing (17) further has a first integral manifold portion (176) that extends outwardly from said third wall and that corresponds in position to said first opening (112), and a second integral manifold portion (178) that extends outwardly from said fourth wall and that corresponds in position to said second opening (114).

6. The battery module (170) as claimed in claim 5, further **characterized in that**:
said first integral manifold portion (176) is formed with a groove (180) communicating spatially with said first opening (112) and said internal space (101), and adapted for the cooling fluid to flow therethrough; and
said second integral manifold portion (178) is formed with a groove (180') communicating spatially with said second opening (114) and said internal space (101), and adapted for the cooling fluid to flow therethrough.

7. The battery module (100, 170) as claimed in any one of claims 1 to 6, further **characterized in that** said first electrode (116) has two end portions (116a), each having a width substantially equal to that of said outer casing (10, 17), and a connecting portion (116b) interconnecting said end portions (116a).

8. The battery module (100, 170) as claimed in any one of claims 1 to 7, further **characterized in that**:
said outer casing (10, 17) further has opposite fifth and sixth walls (15, 16) that interconnect said third and fourth walls (13, 14) and that interconnect said first and second walls (11, 12), a plurality of engaging slots (131) that are formed in said fifth and sixth walls (15, 16), and a plurality of protruding tabs (128) that are disposed on said fifth and sixth walls (15, 16) at positions corresponding to said engaging slots (131); and
said battery module (100, 170) is adapted to be connected to another battery module (100, 170) which is adjacent to one of said fifth and sixth walls (15, 16) with one of said protruding tabs (128) of said battery module (100, 170) engaging a corresponding one of said engaging slots (131) of said another battery module (100, 170).

## Patentansprüche

1. Ein Batteriemodul (100, 170), das angepasst ist zur Nutzung mit einem Kühlfluid, um das Batteriemodul zu kühlen, wobei das Batteriemodul (100, 170) folgende Merkmale umfasst:
eine Mehrzahl von Batteriezellen (102), die jeweils einen gegenüberliegenden ersten und einen zweiten Anschluss (102, 102b) aufweisen, und
ein äußeres Gehäuse (10, 17), das einen Innenraum (101) definiert, der die Batteriezellen (102) aufnimmt und durch den das Kühlfluid hindurchströmt,
wobei das äußere Gehäuse (10, 17) eine erste Öffnung (112) und eine zweite Öffnung (114) aufweist, durch die das Kühlfluid in den Innenraum (101) und aus demselben strömt, eine erste Wand (11), eine zweite Wand (12), wobei die erste und die zweite Wand (11, 12) einander gegenüberliegen, wobei das äußere Gehäuse (10, 17) ferner eine gegenüberliegende dritte und vierte Wand (13, 14) aufweist, die die erste und die zweite Wand (11, 12) verbinden, wobei die erste und die zweite Öffnung (112, 114) in der dritten beziehungsweise vierten Wand (13, 14) gebildet sind;
wobei das äußere Gehäuse (10, 17) einen ersten Ineingriffnahmeabschnitt (108), der auf der ersten Wand (11) angeordnet ist, und einen zweiten Ineingriffnahmeabschnitt (110) aufweist, der auf der zweiten Wand (12) angeordnet ist;
wobei das Batteriemodul (100, 170) ferner folgende Merkmale umfasst:
eine erste Elektrode (116), die auf der ersten Wand (11) angeordnet ist und
elektrisch mit dem ersten Anschluss (102a) jeder der Batteriezellen (102) verbunden ist, und
einen zweite Elektrode (122), die auf der zweiten Wand (12) angeordnet ist und
elektrisch mit dem zweiten Anschluss (102b) jeder der Batteriezellen (102) verbunden ist;
wobei das Batteriemodul (100, 170) dazu angepasst ist, mit einem anderen Batteriemodul (100, 170) gekoppelt zu werden, welches an die erste Wand (11) angrenzt,
wobei der erste Ineingriffnahmeabschnitt (108) des Batteriemoduls (100, 170) den zweiten Ineingriffnahmeabschnitt (110) des anderen Batteriemoduls (100, 170) auf passend in Eingriff nimmt, und wobei die erste Elektrode (116) des Batteriemoduls (100, 170) die zweite Elektrode (122) des anderen Batteriemoduls (100, 170) zum Herstellen einer elektrischen Verbindung kontaktiert; und
wobei das Batteriemodul (100, 170) ferner eine Mehrzahl von beabstandeten Bändern (118) aufweist, die elektrisch leitfähig sind und jeweils zwei benachbarte der Batteriezellen (102) verbinden, wobei jede der ersten und der zweiten Elektrode (116, 122) mit entsprechenden der Bänder (118) verbunden sind, um eine elektrische Verbindung zu jeder der Batteriezellen (102) herzustellen.

2. Das Batteriemodul (100, 170) gemäß Anspruch 1, das ferner **dadurch gekennzeichnet ist, dass** das äußere Gehäuse (10, 17) einen unteren Gehäusekörper (106, 172), der die zweite Wand (12) aufweist, und einen oberen Gehäusekörper (104, 174) umfasst, der die erste Wand (11) aufweist und der mit dem unteren Gehäusekörper (106, 172) zusammenwirkt, um den Innenraum (101) zu definieren.

3. Das Batteriemodul (100, 170) gemäß Anspruch 2, das ferner **dadurch gekennzeichnet ist, dass** der untere Gehäusekörper (106, 172) zumindest eine der ersten und der zweiten Öffnung (112, 114) aufweist.

4. Das Batteriemodul (100) gemäß einem der Ansprüche 1 bis 3, das ferner **dadurch gekennzeichnet ist, dass** das Batteriemodul (100) ferner eine Mehrzahl von Verteilerverbindungsbaugliedern (124) aufweist, die von der dritten und der vierten Wand (13, 14) des äußeren Gehäuses (10) nach außen hervorstehen, die erste und die zweite Öffnung (112, 114) umgeben und dazu angepasst sind, das äußere Gehäuse (10) und einen Verteiler, durch den das Kühlfluid strömt, zu verbinden.

5. Das Batteriemodul (170) gemäß einem der Ansprüche 1 bis 3, das ferner **dadurch gekennzeichnet ist, dass** das äußere Gehäuse (17) ferner einen ersten einstückigen Verteilerabschnitt (176), der sich von der dritten Wand nach außen erstreckt und der hinsichtlich seiner Position der ersten Öffnung (112) entspricht, sowie einen zweiten einstückigen Verteilerabschnitt (178) aufweist, der sich von der vierten Wand nach außen erstreckt und der hinsichtlich seiner Position der zweiten Öffnung (114) entspricht.

6. Das Batteriemodul (170) gemäß Anspruch 5, das ferner **dadurch gekennzeichnet ist, dass**:
der erste einstückige Verteilerabschnitt (176) mit einer Rille (180) gebildet ist, die auf räumliche Weise mit der ersten Öffnung (112) und dem Innenraum (101) in Kommunikation steht, und angepasst ist, damit das Kühlfluid hindurchströmt; und
der zweite einstückige Verteilerabschnitt (178) mit einer Rille (180') gebildet ist, die auf räumliche Weise mit der zweiten Öffnung (114) und dem Innenraum (101) in Kommunikation steht und angepasst ist, damit das Kühlfluid hindurchströmt.

7. Das Batteriemodul (100, 170) gemäß einem der Ansprüche 1 bis 6, das ferner **dadurch gekennzeichnet ist, dass** die erste Elektrode (116) zwei Endabschnitte (116a) aufweist, die jeweils eine Breite aufweisen, die im Wesentlichen der des äußeren Gehäuses (10, 17) gleicht, und einen Verbindungsabschnitt (116b), der die Endabschnitte (116a) verbindet.

8. Das Batteriemodul (100, 170) gemäß einem der Ansprüche 1 bis 7, das ferner **dadurch gekennzeichnet ist, dass**:
das äußere Gehäuse (10,17) ferner eine gegenüberliegende fünfte und sechste Wand (15, 16) aufweist, die die dritte und vierte Wand (13, 14) verbinden und die die erste und zweite Wand (11, 12) verbinden, eine Mehrzahl von Ineingriffnahmeschlitzen (131), die in der fünften und der sechsten Wand (15, 16) gebildet sind, und
eine Mehrzahl von hervorstehenden Vorsprüngen (128), die auf der fünften und der sechsten Wand (15, 16) an Positionen angeordnet sind, die den Ineingriffnahmeschlitzen (131) entsprechen; und
das Batteriemodul (100, 170) dazu angepasst ist, mit einem anderen Batteriemodul (100, 170) verbunden zu werden, das an einer der fünften und sechsten Wand (15, 16) angrenzt, wobei einer der hervorstehenden Vorsprünge (128) des Batteriemoduls (100, 170) einen entsprechenden der Ineingriffnahmeschlitze (131) des anderen Batteriemoduls (100, 170) in Eingriff nimmt.

## Revendications

1. Module de batterie (100, 170) adapté pour être utilisé avec un fluide de refroidissement pour refroidir ledit module de batterie, ledit module de batterie (100, 170) comportant
une pluralité de cellules de batterie (102) présentant, chacune, des première et deuxième bornes opposées (102a, 102b), et
un boîtier extérieur (10, 17) définissant un espace intérieur (101) qui abrite lesdites cellules de batterie (102) dans ce dernier et qui est destiné à ce que le fluide de refroidissement circule à travers ce dernier,
dans lequel ledit boîtier extérieur (10, 17) présente une première ouverture (112) et une deuxième ouverture (114) pour que le fluide de refroidissement entre dans et sorte dudit espace intérieur (101), une première paroi (11), une deuxième paroi (12), lesdites première et deuxième parois (11, 12) étant opposées l'une à l'autre, ledit boîtier extérieur (10, 17) présentant par ailleurs des troisième et quatrième parois opposées (13, 14) qui connectent lesdites première et deuxième parois (11, 12) l'une à l'autre, lesdites première et deuxième ouvertures (112, 114) étant formées respectivement dans lesdites troisième et quatrième parois (13, 14);
dans lequel ledit boîtier extérieur (10, 17) présente une première partie de venue en prise (108) disposée sur ladite première paroi (11), et une deuxième partie de venue en prise (110) disposée sur ladite deuxième paroi (12);
ledit module de batterie (100, 170) comporte par ailleurs
une première électrode (116) disposée sur ladite première paroi (11) et connectée électriquement à ladite première borne (102a) de chacune desdites cellules de batterie (102), et
une deuxième électrode (122) disposée sur ladite deuxième paroi (12) et connectée électriquement à ladite deuxième borne (102b) de chacune desdites cellules de batterie (102);
ledit module de batterie (100, 170) est adapté pour être couplé à un autre module de batterie (100, 170) qui est adjacent à ladite première paroi (11), où ladite première partie de venue en prise (108) dudit module de batterie (100, 170) vient en prise de manière appropriée avec ladite deuxième partie de venue en prise (110) dudit autre module de batterie (100, 170), et où ladite première électrode (116) dudit module de batterie (100, 170) entre en contact avec ladite deuxième électrode (122) dudit autre module de batterie (100, 170) pour établir une connexion électrique; et
ledit module de batterie (100, 170) comporte par ailleurs une pluralité de bandes espacées (118) qui sont électriquement conductrices et connectent, chacune, l'une à l'autre deux adjacentes desdites cellules de batterie (102), chacune desdites première et deuxième électrodes (116, 122) étant connectée à des bandes correspondantes desdites bandes (118) de manière à établir une connexion électrique avec chacune desdites cellules de batterie (102).

2. Module de batterie (100, 170) selon la revendication 1, **caractérisé par** ailleurs par le fait que ledit boîtier extérieur (10, 17) comporte un corps de boîtier inférieur (106, 172) qui présente ladite deuxième paroi (12), et un corps de boîtier supérieur (104, 174) qui présente ladite première paroi (11) et qui coopère avec ledit corps de boîtier inférieur (106, 172) pour définir ledit espace intérieur (101).

3. Module de batterie (100, 170) selon la revendication 2, **caractérisé par** ailleurs par le fait que ledit corps de boîtier inférieur (106, 172) présente au moins l'une desdites première et deuxième ouvertures (112, 114).

4. Module de batterie (100) selon l'une quelconque des revendications 1 à 3, **caractérisé par** ailleurs par le fait que ledit module de batterie (100) comporte par ailleurs une pluralité d'éléments de connexion de collecteur (124) ressortant vers l'extérieur desdites troisième et quatrième parois (13, 14) dudit boîtier extérieur (10), en entourant lesdites première et deuxième ouvertures (112, 114), et qui sont adaptés pour connecter l'un à l'autre ledit boîtier extérieur (10) et un collecteur qui est destiné à ce que le fluide de refroidissement circule à travers ce dernier.

5. Module de batterie (170) selon l'une quelconque des revendications 1 à 3, **caractérisé par** ailleurs par le fait que ledit boîtier extérieur (17) comporte par ailleurs une première partie de collecteur solidaire (176) qui s'étend vers l'extérieur à partir de ladite troisième paroi et qui correspond en position à ladite première ouverture (112), et une deuxième partie de collecteur solidaire (178) qui s'étend vers l'extérieur à partir de ladite quatrième paroi et qui correspond en position à ladite deuxième ouverture (114).

6. Module de batterie (170) selon la revendication 5, **caractérisé par** ailleurs par le fait que:
ladite première partie de collecteur solidaire (176) est formée avec une rainure (180) communiquant spatialement avec ladite première ouverture (112) et ledit espace intérieur (101), et est adaptée pour que le fluide de refroidissement circule à travers cette dernière; et
ladite deuxième partie de collecteur solidaire (178) est formée avec une rainure (180') communiquant spatialement avec ladite deuxième ouverture (114) et ledit espace intérieur (101), et est adaptée pour que le fluide de refroidissement circule à travers cette dernière.

7. Module de batterie (100, 170) selon l'une quelconque des revendications 1 à 6, **caractérisé par** ailleurs par le fait que ladite première électrode (116) présente deux parties d'extrémité (116a) présentant, chacune, une largeur sensiblement égale à celle dudit boîtier extérieur (10, 17), et une partie de connexion (116b) connectant lesdites parties d'extrémité (116a) l'une à l'autre.

8. Module de batterie (100, 170) selon l'une quelconque des revendications 1 à 7, **caractérisé par** ailleurs par le fait que:
ledit boîtier extérieur (10, 17) présente par ailleurs des cinquième et sixième parois opposées (15, 16) qui connectent l'une à l'autre lesdites troisième et quatrième parois (13, 14) et qui connectent l'une à l'autre lesdites première et deuxième parois (11, 12), une pluralité de fentes de venue en prise (131) qui sont formées dans lesdites cinquième et sixième parois (15, 16), et une pluralité de pattes saillantes (128) qui sont disposées sur lesdites cinquième et sixième parois (15, 16) à des positions correspondant auxdites fentes de venue en prise (131); et
ledit module de batterie (100, 170) est adapté pour être connecté à un autre module de batterie (100, 170) qui est adjacent à l'une desdites cinquième et sixième parois (15, 16) par l'une desdites pattes saillantes (128) dudit module de batterie (100, 170) venant en prise avec l'une correspondante desdites fentes de venue en prise (131) dudit autre module de batterie (100, 170).
